# EUROPÄISCHE PATENTSCHRIFT

(11) **EP 1 301 084 B1**
(45) Veröffentlichungstag und Bekanntmachung des Hinweises auf die Patenterteilung: **03.01.2007**
(21) Anmeldenummer: 01938261.3
(22) Anmeldetag: 15.06.2001
(51) Int. Cl.: A23B 7/158, A23B 7/154, A23B 7/157

(54) **VERFAHREN ZUR KONSERVIERUNG VON NAHRUNGSMITTELN**
METHOD FOR PRESERVING FOODSTUFF
PROCEDE DE CONSERVATION D'ALIMENTS

(30) Priorität: 12.07.2000 DE 10033901
(43) Veröffentlichungstag der Anmeldung: 16.04.2003
(73) Patentinhaber: Food Freshley Gesellschaft für Mineralstoff-Herstellung MbH & Co. KG, 33739 Bielefeld (DE)
(72) Erfinder: SINGH, Sukhdev, 33739 Bielefeld (DE)
(74) Vertreter: Dantz, Jan Henning
(86) Internationale Anmeldenummer: PCT/EP2001/006731
(87) Internationale Veröffentlichungsnummer: WO 2002/003809

(56) Entgegenhaltungen:
- EP-A- 0 983 728
- EP-A- 1 004 246
- EP-A- 1 010 368
- WO-A-94/15476
- CA-A- 2 102 362
- DE-A- 4 223 245
- US-A- 5 087 467
- US-A- 5 863 584
- PATENT ABSTRACTS OF JAPAN vol. 018, no. 490 (C-1249), 13. September 1994 (1994-09-13) & JP 06 165637 A (FARM WAKAYAMA KK), 14. Juni 1994 (1994-06-14)

## Beschreibung

Die vorliegende Erfindung betrifft ein Verfahren zur Konservierung von Nahrungsmitteln gemäß dem Oberbegriff des Anspruchs 1.

Mittels solcher Konservierungen werden insbesondere industriell bearbeitete Nahrungsmittel über einen gewissen Zeitraum haltbar gemacht.

Dabei ist es bekannt, Produkte wie Gemüse, Obst und Salat zu beschwefeln, begasen, zu bestrahlen, mit Chlor zu behandeln oder genetisch zu manipulieren. Diese Methoden sind jedoch nicht nur gesundheitlich bedenklich, sondern vielfach nicht geeignet, die Haltbarkeit über einen gewünschten längeren Zeitraum zu garantieren.

Diese Konservierungsmethoden haben überdies den Nachteil, daß sie das behandelte Produkt geschmacklich beeinträchtigen. So ist eine Beschwefelung bislang nur unzureichend dosierbar, so daß entweder ein zu hoher Anteil an Schwefel eingesetzt wird, der zu einer geschmacklichen Veränderung führt, oder ein zu geringer Anteil, der wiederum die Konservierungsdauer verkürzt, mit der Folge, daß das behandelte Produkt vorzeitig verdirbt.

Um gesundheitlich bedenkliche und geschmacklich das behandelte Produkt verändernde Konservierungsstoffe zu ersetzen, ist es bekannt, als Konservierungsstoff ein Gemisch aus Mineralstoffen in einer Flüssigkeit, üblicherweise Wasser, zu lösen und das zu konservierende Nahrungsmittel in diese so aufbereitete Flüssigkeit zu tauchen oder das Nahrungsmittel damit zu spülen.

Allerdings ist eine exakte Reproduzierbarkeit dieser Konservierung bislang nicht möglich, da sich mit zunehmender Zeitdauer die Konzentration des Gemisches in der Flüssigkeit so verändert, daß die gewünschte Wirkung der Konservierung nicht gewährleistet werden kann.

Eine solche Veränderung der Gemisch-Konzentration der Flüssigkeit resultiert z. B. aus der Abgabe von Produktflüssigkeit, wie sie daraus austritt, wenn das Produkt durch Schälen oder dergleichen bearbeitet ist.

Bei der Konservierung von geschälten Kartoffeln tritt beispielsweise Stärke aus, die die Konzentration der Konservierungsflüssigkeit hochgradig beeinflußt.

Um hier Abhilfe zu schaffen, ist es bislang üblich, in mehr oder weniger willkürlich festgelegten Zeitabständen manuell Konservierungsmittel zuzugeben, jedoch ist eine bestimmte Konzentration von Konservierungsmitteln lediglich rein zufällig und, wie erwähnt, keinesfalls reproduzierbar.

Wenngleich der Einsatz von Mineralstoffen als Konservierungsmittel erhebliche Vorteile gegenüber den anderen bekannten Konservierungsstoffen bietet, ist das bekannte manuelle Verfahren zur Erhaltung einer gleichbleibenden Konzentration von Konservierungsmitteln in der Flüssigkeit höchst ungenügend.

Die US 5 863 584 offenbart ein Verfahren zur Behandlung von Wasser, das gereinigt werden soll um damit Obst oder Gemüse zu reinigen. Dabei soll insbesondere anhaftende Erde oder Schmutz entfernt werden.

Die CA 2 102 362 zeigt ein Verfahren und eine Vorrichtung für die mindestens teilweise Sterilisierung von Nahrungsmitteln, wobei das entsprechende Nahrungsmittel gereinigt und mit Ozon eine Sterilisierung erreicht werden soll.

Die EP 1 004 246 offenbart ein Verfahren zur Behandlung von Gegenständen mit Wasser, das durch Ozon sterilisiert ist.

Die WO 94/15476 offenbart die Behandlung von Früchten und Gemüse durch Kalziumsalze, wobei gesteuert werden kann, wieweit Tomaten mit einer Kalziumlösung behandelt werden.

Die EP 983 728 offenbart ein Verfahren zum Reinigen von Nahrungsmitteln mit Wasser, dem Ozon zugesetzt wurde, damit entsprechende Nahrungsmittel sterilisiert werden können.

Um die Frische von Gemüse und Früchten möglichst lange zu erhalten, zeigt die JP 6 165 637 eine Möglichkeit zur Sterilisation, indem die Nahrungsmittel einem niedertemperierten Wasser mit Ozon ausgesetzt werden.

Die EP 1 010 368 zeigt eine Zusammensetzung zur Haltbarmachung von Lebensmitteln, wobei diverse Säuren bzw. Salze zugesetzt werden.

Die DE 42 23 245 offenbart eine wässrige Lösung zum Haltbarmachen von Gemüse, das schon vorbearbeitet wurde. Die Nahrungsmittel werden in eine wässrige Lösung mit Zitronensäure und anderen Bestandteilen behandelt, um das Gemüse anschließend zu verpacken.

Der vorliegenden Erfindung liegt daher die Aufgabe zugrunde, ein Verfahren der gattungsgemäßen Art so auszubilden, daß eine weitgehend gleichbleibende Konservierung der Nahrungsmittel gewährleistet ist.

Diese Aufgabe wird durch ein Verfahren gelöst, das die Merkmale des Anspruchs 1 aufweist.

Durch diese Ausbildung des Verfahrens erfolgt einerseits eine ständige Überwachung der Konzentration des Gemisches aus Konservierungsstoffen in der Flüssigkeit und andererseits erforderlichenfalls eine Zugabe der Konservierungsstoffe in der erforderlichen Menge in dem Fall, daß die Konzentration unterhalb des SollWertes liegt.

Abgesehen von einer sehr geringen Schwankungsbreite ist somit die Konservierung auf gleichem Niveau reproduzierbar, wodurch sich naturgemäß ein erheblicher wirtschaftlicher Vorteil ergibt.

So ist in jedem Fall die gewünschte, durch die Konservierung erzielbare Frischhaltedauer exakt einzuhalten und gegenüber dem Stand der Technik sogar verlängerbar, da die Konservierungsdauer für das jeweilige Produkt genau bestimmbar ist.

Die Zugabe von Mineralstoffen als Konservierungsmittel, d. h., das genaue Verhältnis der einzelnen, zu einem Gemisch zusammenzufügenden Bestandteile, beispielsweise Lactose, Calziumclorid, Zitronensäure, Kaliumcitrat, Magnesiumchlorat, Ascorbinsäure, Natriumpyrosulfid und Natriumhydrogencarbonat, ist vorab empirisch zu ermitteln, kann üblicherweise aber für alle Produktsorten jeweils gleich bleiben.

Nach der Erfindung wird die Leitfähigkeit, der pH-Wert, der Redox-Wert und/oder ein SO₂-Gehalt und/oder der Ascorbinsäuregehalt der Konservierungsflüssigkeit gemessen, die gleichzeitig die Waschflüssigkeit bildet, mit der das zuvor bearbeitete frische Nahrungsmittel gewaschen wird.

Dabei ist es wichtig, die entsprechenden Werte der Konservierungskomponenten, also der Mineralstoffe, zu kennen, so daß eine entsprechende Einstellung des SollWertes vorgenommen werden kann.

In einem Versuch zur Bestätigung der theoretischen Überlegungen in der Praxis wurden 2000 kg Eisbergsalat mit dem erfindungsgemäßen Verfahren behandelt, wobei etwa 3% des aus den genannten Mineralstoffen bestehenden Konzentrates im Waschwasser gelöst waren. Überraschend hat sich gezeigt, daß durch das Verfahren eine Haltbarkeitsdauer von 6-8 Tagen erreicht wurde, wobei die Lagerung bei einer Temperatur von 2-4° C erfolgte. Überdies haben mikrobiologische Untersuchungen ergeben, daß der behandelte Salat nach 8 Tagen sensorisch und mikrobiologisch einwandfrei war.

Ein vergleichbares Ergebnis war bei der Behandlung von Äpfeln feststellbar. Diese stellen eine Hauptkomponente für viele Kuchen und Süßigkeiten dar. Zusätzlich finden sie Verwendung bei vielen heißen Zwischenmahlzeiten wie z. B. Apfeltaschen, Apfelstrudel oder dergleichen. Von daher bietet es sich an, Äpfel in bezug auf ihre Verwendungsdauer zu optimieren. Dabei ermöglicht das erfindungsgemäße Verfahren die Konservierung ohne großen Aufwand in den Fertigungsprozeß zu integrieren.

Die Äpfel, die vorzugsweise nach dem erfindungsgemäßen Verfahren behandelt werden, werden in großen Schälbetrieben ganzjährig geschält und an Konsumenten wie Großbäckereien, Restaurants, Kantinen, Hotels und Kliniken geliefert. Überwiegend werden dabei bislang die Äpfel geschwefelt, was jedoch hinsichtlich der Konservierung als auch hinsichtlich der gesundheitlichen und geschmacklichen Beeinträchtigung für den Verbraucher unbefriedigend ist. Überdies birgt die Beschwefelung auch für die Mitarbeiter der Schälbetriebe gesundheitliche Gefahren.

Bei der industriellen Verarbeitung der Äpfel werden diese zunächst mit kaltem Wasser gewaschen, danach in einer Messerschälanlage geschält und mit Hilfe eines Förderbandes oder eines Wasserkanals bis zu einem Sortiertisch transportiert. Nach Bedarf werden sie anschließend geviertelt, halbiert, gewürfelt oder in Streifen geschnitten, bevor sie in das Flüssigkeitsbad mit den Konservierungsstoffen getaucht werden.

Dort werden die Äpfel etwa 2-3 Minuten umgewälzt und dann über ein Förderband heraustransportiert. Nach einem Abtropfen werden sie in geeigneten Verpackungsbeuteln verpackt und bei 3-4° C gelagert. Wie sich gezeigt hat, liegt die Haltbarkeit bei 8-10 Tagen, wobei die Äpfel in sensorischer und mikrobiologischer Hinsicht einwandfrei sind. Hierzu zählt insbesondere das Verhindern der enzymatischen Bräunung des Apfelfleisches, die für den Verbraucher eine Qualitätsminderung darstellt.

Da im Regelfall verschiedene Apfelsorten bearbeitet werden, die jeweils unterschiedliche Säuregehalte aufweisen, ist es bisher praktisch nicht möglich, eine optimale Konservierung zu erreichen. Dabei reicht eine kleine Fehldosierung, insbesondere eine Unterdosierung, aus, um einen tonnenweisen Verlust der Äpfel, die nicht mehr verzehrt werden können, hinnehmen zu müssen. Kommt es hingegen zu einer Überdosierung, schmecken die Äpfel nach Schwefel, wobei dann auch gleichzeitig die zugelassenen Richtwerte weit überschritten werden.

In dem genannten Versuch wurden 20 Tonnen Äpfel mit dem erfindungsgemäßen Verfahren behandelt mit dem geschilderten positiven Ergebnis. Eine Verfälschung von Meßergebnissen, durch den Apfelsäuregehalt verursacht, ist durch die Erfindung praktisch ausgeschlossen.

Dies gilt gleichermaßen für die Konservierung von geschälten Kartoffeln, wobei hier zunächst nach dem Schälen eine erste Konservierung erfolgt, da die Kartoffeln einer Nachbearbeitung, beispielsweise zur Entfernung von Augen oder ähnlichen Schadstellen unterzogen werden müssen und anschließend erst zerteilt werden.
Aufgrund der zeitlichen Dauer dieser Nachbearbeitung und zur Verhinderung der dabei auftretenden Braunfärbung des Kartoffelfleisches ist also eine Konservierung nach dem Schälen und nach einer Endbearbeitung, dem Zerteilen, erforderlich.

Grundsätzlich besteht dabei die Möglichkeit, für diese beiden Konservierungsvorgänge dieselbe Flüssigkeit zu verwenden, d. h., die Kartoffeln je nach Bearbeitungsstand, in dasselbe Tauchbad zu führen.

Eine Vorrichtung zur Durchführung des Verfahrens ist so ausgebildet, daß in einem Tauchbehälter mindestens eine Meßsonde vorgesehen ist, die mit einem Rechner verbunden ist, in der der ermittelte Ist-Wert mit einem eingestellten Soll-Wert vergleichen wird, und daß an den Rechner eine Dosierpumpe angeschlossen ist, die aus einem Behälter das Gemisch aus Konservierungsstoffen portioniert in den Tauchbehälter fördert. Dabei kann die Dosierpumpe als Kolbenpumpe ausgebildet sein.

Das Gemisch aus Konservierungsstoffen liegt vorteilhafterweise in flüssiger Form vor, wobei dies bei Einsatz von Mineralstoffen zu 10 % in Wasser gelöst ist.

## Patentansprüche

1. Verfahren zur Konservierung von verbrauchsfertig verarbeiteten frischem Eisbergsalat, frischen geschälten Äpfeln oder frischen geschälten Kartoffeln, wobei das Nahrungsmittel in eine Flüssigkeit getaucht wird, in der ein Gemisch aus Konservierungsstoffen gelöst ist, wobei die Konzentration des Gemisches in der Flüssigkeit ständig gemessen, der ermittelte Ist-Wert mit einem Soll-Wert verglichen und bei dessen Unterschreiten ein entsprechender Anteil des Gemisches der Flüssigkeit zugeführt wird **dadurch gekennzeichnet, dass** zur Messung der Konzentration des Gemisches in der Flüssigkeit die Leitfähigkeit der Flüssigkeit, deren pH-Wert, der Redox-Wert und/oder ein SO₂-Gehalt und/oder eine Restmenge von Ascorbinsäure gemessen werden.

2. Verfahren nach Anspruch 1, **dadurch gekennzeichnet, dass** das Gemisch aus Konservierungsstoffen in die als Waschwasser dienende Flüssigkeit geführt wird.

3. Verfahren nach Anspruch 1 oder 2, **dadurch gekennzeichnet, dass** die Konzentration des Gemisches in der Flüssigkeit und/oder der Anteil der Bestandteile des Gemisches dem jeweils zu konservierenden Produkt angepasst wird.

4. Verfahren nach einem der Ansprüche 1 bis 3, **dadurch gekennzeichnet, dass** zur Herstellung des Gemisches als Konservierungsstoffe Lactose, Calciumclorid, Zitronensäure, Kaliumcitrat, Magnesiumchlorat, Ascorbinsäure, Natriumpyrosulfit und Natriumhydrogencarbonat eingesetzt werden.

## Claims

1. Method for preserving ready-made fresh iceberg lettuce, fresh and peeled apples or fresh and peeled potatoes whereas the foodstuff is dipped into a liquid in which a mixture of preservatives is solubilized whereas the concentration of the mixture in the liquid is measured constantly, the actual value is compared to the ideal value and its undershooting is compensated by supplying a corresponding part of the mixture to the liquid **characterized in that** the conductibility of the liquid, its PH-value, its redox-value and / or its SO₂-concentration und / or a remaining quantity of ascorbic acid is measured in order to measure the concentration of the mixture of the liquid.

2. method as claimed in claim 1, **characterized in that** the mixture of preservatives is leaded into the liquid which serves as washing water.

3. method as claimed in claims 1 or 2 **characterized in that** the concentration of the mixture in the liquid and / or the quotient of the components of the mixture is adapted to the corresponding product being preserved.

4. Method as claimed in one of the claims 1 to 3 **characterized in that** for the production of the mixture lactose, calcium chloride, citric acid, potassium citrate, magnesium chlorate, ascorbic acid, sodium pyro-sulfite and sodium-hydrogen-carbonate are used as preservatives.

## Revendications

1. Procédé de conservation de la laitue d'hiver fraîche, des pommes fraîches et pelées ou des pommes de terre fraîches et pelées, toutes prêtes à la consommation, au cours duquel l'aliment est trempé dans un liquide qui est composé d'une solution d'un mélange de substances de conservation, et pendant lequel la concentration dudit mélange dans le liquide est mesurée constamment, la valeur obtenue est comparée à une valeur prescrite, et lorsque la valeur mesurée est inférieure à la valeur prescrite, une quantité correspondante du mélange est alimentée au liquide, **caractérisé en ce que**, pour déterminer la concentration du mélange dans le liquide, la conductibilité du liquide, sa valeur pH, la valeur redox et/ou une teneur en SO₂ et/ou une quantité restante d'acide ascorbique sont mesurées.

2. Procédé selon la revendication 1, **caractérisé en ce que** le mélange de substances de conservation est ajouté au liquide qui est utilisé comme lavure.

3. Procédé selon la revendication 1 ou 2, **caractérisé en ce que** la concentration du mélange dans le liquide et/ou la proportion des composants du mélange est adaptée en vue du produit à conserver.

4. Procédé selon une des revendications 1 à 3, **caractérisé en ce que**, pour produire ledit mélange, on utilise des substances de conservation telles que le lactose, le chlorure de calcium, l'acide citrique, le citrate de potassium, le chlorate de magnésium, l'acide ascorbique, le sodium pyro-sulfite et le sodium hydrogène carbonate.
